# EUROPÄISCHE PATENTSCHRIFT

(11) **EP 2 324 695 B1**
(45) Veröffentlichungstag und Bekanntmachung des Hinweises auf die Patenterteilung: **30.03.2016**
(21) Anmeldenummer: 10172780.8
(22) Anmeldetag: 13.08.2010
(51) Int. Cl.: A01D 65/02

(54) **Ährenheber**
Crop lifter
Releveur d'épis

(30) Priorität: 02.09.2009 DE 102009039670
(43) Veröffentlichungstag der Anmeldung: 25.05.2011
(73) Patentinhaber: Gebr. Schumacher Gerätebaugesellschaft mbH, 57612 Eichelhardt (DE)
(72) Erfinder: Schumacher, Friedrich-Wilhelm, D-57612 Birnbach (DE); Schumacher, Gustav, 57612, Eichelhardt (DE)
(74) Vertreter: Müller, Thomas Michael

(56) Entgegenhaltungen:
- DE-A1- 2 325 916
- FR-A1- 2 734 120
- GB-A- 375 158
- US-A- 723 084
- US-A- 1 846 453

## Beschreibung

Die Erfindung betrifft einen Ährenheber gemäß dem Oberbegriff des Anspruchs 1.

Ährenheber gleitet mit dem vorderen Teil der Tragschiene, an dem der Halmheber befestigt ist, über den Boden oder bewegt sich knapp über dem Boden und nimmt mit dem Halmheber am Boden liegende Halme des Ernteguts auf, so dass diese durch das Messerwerk des Mähwerks abgeschnitten werden können und somit die Ähren beispielsweise einem Dreschwerk zugeführt werden können.

Ein Ährenheber der eingangs genannten Art ist aus der GB 375 158 bekannt. Der dort gezeigt Ährenheber weist eine schwenkbare Spitze auf, die nach hinten wegschwenken kann, wenn die Spitze in den Boden fährt oder auf ein Hindernis trifft. Hierzu ist die Spitze über eine Feder zur Einnahme ihrer Ausgangsposition mit Kraft beaufschlagt. Die Feder ist zum einen an der Spitze und zum anderen an einer Stange befestigt, wobei sich letztere axial gegen den ersten Abschnitt des Halmhebers abstützt und axial zu diesem verstellbar ist.

Einen anderen Ährenheber der eingangs genannten Art zeigt FR 2 734 120 A1, bei dem der gesamte Halmheber gegenüber der Tragschiene verschwenkbar ist. Hierbei stützt sich der Halmheber über einen Hebel an der Tragschiene ab, wobei ein Längenausgleich vorgesehen sein muss. Dieser wird dadurch realisiert, dass ein zweiter Abschnitt der Halmhebers als Stange gestaltet ist, welche in dem ersten Abschnitt axial verschiebbar aufgenommen ist.

Einen weiteren Ährenheber zeigt die DE 23 25 916 A, bei dem der Halmheber durchgängig aus einem U-förmigen Profilteil besteht, dessen Schenkel sich ausgehend von der Verschweißung des Halmhebers an der Tragschiene zum freien Ende des Halmhebers zunehmend verkürzen.

Bei durchgängig U-profilförmigen Halmhebern nach dem Stand der Technik sind regelmäßig Verhakungen zwischen dem U-Profil und den Haspelzinken einer reversiert betriebenen Haspel ein Problem, da sich die Haspelzinken in dem U-Profil verhaken und den Halmheber gegenüber der Tragschiene verbiegen können.

Hiervon ausgehend ist es die Aufgabe der vorliegenden Erfindung einen Ährenheber zu schaffen, bei dem der Halmheber in geringerem Maße zu Schwingungen neigt und der bei reversiert betriebener Haspel in geringerem Maße der Gefahr einer Beschädigung durch die Haspelzinken ausgesetzt ist.

Die Aufgabe wird durch einen Ährenheber gemäß Anspruch 1 gelöst.

In den Unteransprüchen 2 bis 7 werden besonders vorteilhafte Ausführungsformen des Ährenhebers gemäß Anspruch 1 angegeben.

Dadurch, dass der Halmheber erfindungsgemäß sowohl eine U-förmige Profilierung als auch eine rohrförmige Profilierung aufweist, wird in vorteilhafter Weise erreicht, dass die Schwingungsamplitude des Halmhebers unterbrochen wird. Dies trägt zu einer Beruhigung der Eigenschwingungen des Halmhebers bei. Ferner verringert die geschlossene und schlanke Formgebung des Halmhebers, die durch das rohrförmige Profilteil erreicht wird, die Möglichkeit von Kollisionen zwischen dem Halmheber und den Haspelzinken bei Vorwärtsbetrieb der Haspel. Bei Reversierbetrieb der Haspel wird die Gefahr von Verhakungen zwischen dem Halmheber und den Haspelzinken wirkungsvoll ausgeschlossen oder zumindest stark verringert.

Die zwei Abschnitte des Halmhebers sind einstückig gestaltet. Hierfür kann vorgehen sein, dass der Halmheber als ein Blechumformteil gestaltet ist. Als Vorteil ist hier die einfache und kostengünstige Fertigung zu nennen.

Besonders wirkungsvoll wird die Verringerung der Kollision bzw. der Gefahr einer Verhakung zwischen dem Halmheber und den Haspelzinken gewährleistet, wenn der zweite Abschnitt in einem Endbereich des Halmhebers angeordnet ist.

Für den ersten Abschnitt des Halmhebers ist vorgesehen, dass dieser mit der Tragschiene verbunden ist. Da der erste Abschnitt als U-Profil gestaltet ist, kann beispielsweise über eine Verschweißung, die sowohl auf der Innenseite als auch auf der Außenseite des U-Profils zu der Tragschiene angebracht wird, eine besonders stabile Verbindung erreicht werden. Denkbar sind allerdings auch andere Verbindungstechniken.

Bevorzugt schließen beide Abschnitte des Halmhebers einen zur Tragschiene sich öffnenden Winkel ein. Durch dieses Abflachen der Steigung des Halmhebers in seinem Endbereich wird erreicht, dass sich die Höhe reduziert, auf die das Getreide gehoben wird. Somit wird das Getreide lediglich nur auf eine Höhe angehoben, in der die Haspelzinken der Haspel weniger aggressiv auf das Getreide einwirken. Dies führt zu einer Verminderung des vorzeitigen und unerwünschten Ausdrusches durch Haspelarbeit.

In weiterer Ausgestaltung kann vorgesehen sein, dass die Tragschiene über Befestigungsmittel mit dem Mähfinger verbindbar ist und dass ein Übergangsbereich der beide Abschnitte des Halmhebers in Betriebsposition des Ährenhebers bezogen auf eine Horizontale oberhalb der Befestigungsmittel liegt.

Ein bevorzugtes Ausführungsbeispiel der Erfindung ist in den Zeichnungen dargestellt. Hierin zeigen:
Figur 1 eine Seitenansicht eines an einem Mähmesserbalken und Mähfinger einer Erntemaschine festgelegten Ährenhebers,
Figur 2 den Halmheber des erfindungsgemäßen Ährenhebers nach Figur 1 in
   a) einer Seitenansicht,
   b) einer Ansicht von unten in das U-Profil,
   c) einem Querschnitt längs der Linie A-A nach Figur 2a,
   d) einem Querschnitt längs der Linie B-B nach figur 2a und
Figur 3 eine Seitenansicht des Ährenhebers nach Figur 1 und einer Haspel mit Haspelzinken.

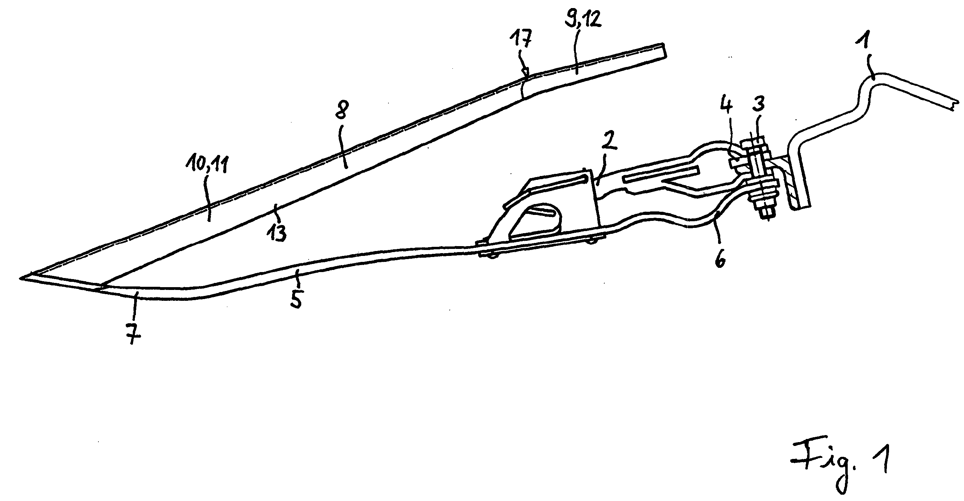

In Figur 1 ist der Mähbalken 1 in schematischer Darstellung erkennbar, von dem ein Mähfinger 2 vorstehend dargestellt ist. Dieser ist über eine Schraube 3 am Mähbalken 1 festgelegt. Es sind in die Zeichenebene hinein, bzw. aus dieser heraus mehrere weitere Mähfinger 2 dem Mähbalken 1 mit Abstand zueinander zugeordnet. Die Mähfinger 2 dienen zur Führung eines Messerbalkens 4, der Mähklingen zum Abtrennen des Erntegutes aufweist. Das erste Ende 6 einer Tragschiene 5 ist beispielsweise über eine Schraube 3 am Mähbalken 1 festlegbar. Die Tragschiene 5 ist bevorzugt aus einem Flachmaterial hergestellt und weist biegeelastische Eigenschaften auf. Die Tragschiene 5 ist über Befestigungsmittel in Form eines Halters 16 am Mähfinger 2 abgestützt. Der Halter 16 ist mit der Tragschiene 5 beispielsweise durch Nieten verbunden.

An dem dem ersten Ende 6 entfernten zweiten Ende 7 ist an der Tragschiene 5 ein Halmheber 8 befestigt, der im Winkel zur Tragschiene 5 ansteigend in Richtung zum Mähbalken 1 hin verläuft. Die Tragschiene 5 und der Halmheber 8 schließen somit einen spitzen Winkel ein. Die Verbindung zwischen der Tragschiene 5 und dem Halmheber 8 kann beispielsweise durch eine Verschweißung erfolgen.

Der Halmheber 8 besteht aus einem U-förmigen Profilteil 11, das an seinem der Befestigung mit der Tragschiene 5 abgewandten Abschnitt 9 zu einem rohrförmigen Profilteil 12 umgeformt ist. An seiner der Befestigung mit der Tragschiene 5 zugewandten Abschnitt 10 besitzt der Halmheber 8 relativ breite Schenkel 13, die sich in Richtung des rohrförmigen Profilteils 12 verjüngen. Die befestigungsseitig breiten Schenkel 11 sind für eine feste Schweißverbindung mit der Tragschiene 5 günstig. Das U-förmigen Profilteil 11 geht in das rohrförmige Profilteil 12 in einem Übergangsbereich in Form eines Knicks 17 über und schließt somit einen zur Tragschiene 5 sich öffnenden Winkel ein.

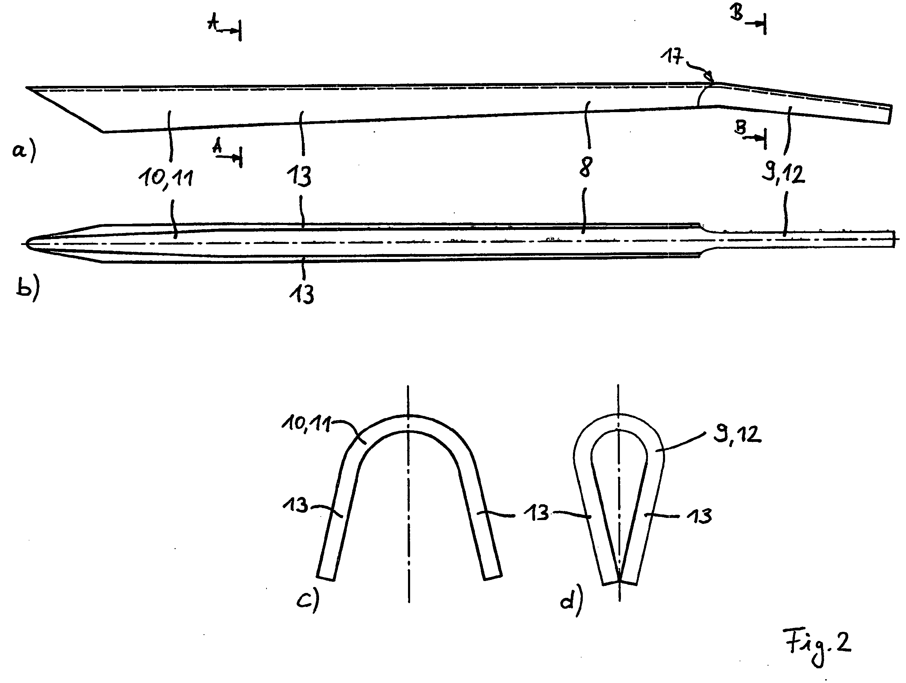

In Figur 2c ist zu erkennen, dass die beiden Schenkel 13 des U-förmigen Profilteils 11 sich voneinander wegspreizen. Dies stellt sicher, dass sich während des Arbeitsvorganges kein Schmutz in dem U-Profil sammeln kann, bzw. falls sich Schmutz dort gesammelt hat, er leichter entfernt werden kann. Es kann auch vorgesehen sein, dass die beiden Schenkel 13 des U-förmigen Profilteils 11 parabel zu einander verlaufen.

In den Figuren 2b und 2d ist zu erkennen, dass der Halmheber 8 inseinem Abschnitt 9 zu einem rohrförmigen Profilteil 12 umgeformt ist. Dies ist im einfachsten Fall dadurch erfolgt, dass die beiden Schenkel 13 des im Ausgangszustand U-förmigen Profils aufeinander zu umgebogen wurden. Hierdurch ergibt sich der in Figur 2d tropfenformartige Querschnitt. Als weiterer Arbeitsschritt kann vorgesehen werden, dass dieser tropfenformartige Querschnitt zu einem runden bzw. annähernd runden Querschnitt umgeformt wird, was hier nicht dargestellt ist.

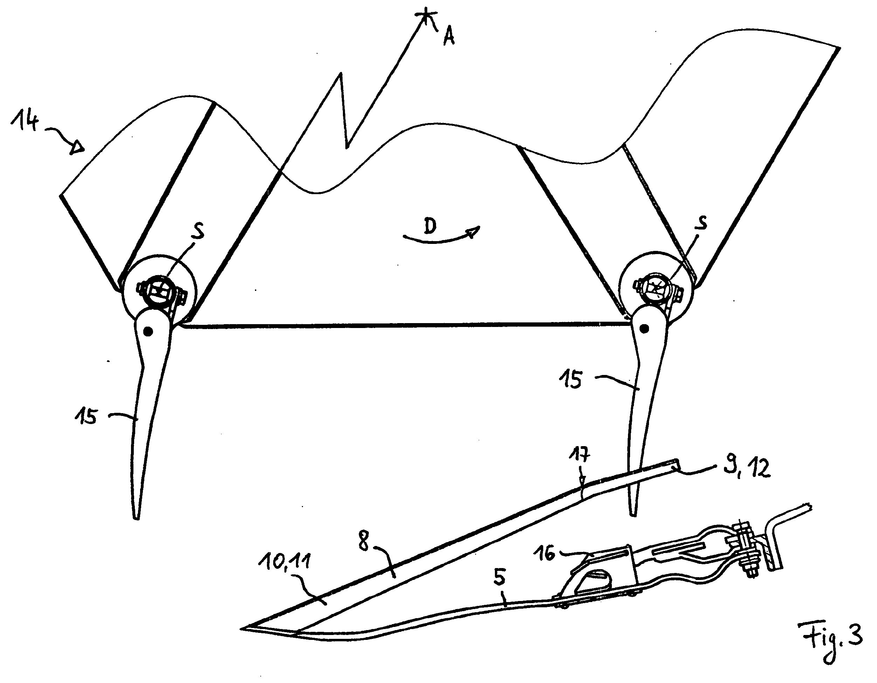

In Figur 3 ist der Ährenheber mit dem Halmheber 8 und ausschnittsweise eine Haspel 14 mit Haspelzinken 15 und deren räumliche Anordnung in Betriebsposition zueinander gezeigt. Die Haspel 14 ist um die Drehachse A in der eingezeichneten Drehrichtung D vorwärts drehbar. In dieser Drehrichtung D führt die Haspel 14 das Erntegut der Verarbeitung zu. Eine Drehung der Haspel 14 entgegensetzt zur Drehrichtung D wird als Reversierbetrieb bezeichnet. An der Haspel 14 sind Haspelklingen 15 um Schwenkachsen S schwenkbar gehalten.

Die räumliche Zuordnung von Halmheber 8 und Haspelzinken 15 ist dergestalt, dass der Halmheber 8 in der Zeichnungsebene liegt und die Haspelzinken 15 mit geringem Abstand hinter dem Halmheber 8, dass heißt sie liegen hinter der Zeichnungsebene. Wiederum mit geringem Abstand hinter den Haspelzinken 15 ist ein nicht dargestellter weiterer Ährenheber mit einem Halmheber angeordnet. Somit durchfahren die Haspelzinken 15 einen Abstand, senkrecht zur Zeichnungsebene betrachtet, zwischen zwei Halmhebern 8, der etwas größer ist, als die Breite der Haspelzinken 15, wiederum senkrecht zur Zeichnungsebene betrachtet. Problematisch ist hierbei während des Betriebs, dass Erschütterungen des Geräts oder auch ein leicht seitlich verbogener Haspelzinken 15 bzw. Halmheber 8 dazu führen, dass der oder die Haspelzinken 15 nicht mehr exakt mit dem Abstand zwischen den Halmhebern 8 fluchten und die Haspelzinken 15 gegen einen Halmheber 8 schlagen. Dies ist grundsätzlich unerwünscht, da dies insbesondere im Reversierbetrieb dazu führen kann, dass sich eine Haspelzinke 15 mit dem Halmhebern 8 verhakt und diesen gegenüber der Tragschiene 5 verbiegt. Dies kann zu einem Stillstand der gesamten Maschine führten.

Da erfindungsgemäß nunmehr vorgesehen ist, dass, wie insbesondere in der Figur 2b zu erkennen ist, der der Tragschiene 5 abgewandte Abschnitt 9 zu einem rohrförmigen Profilteil 12 umgeformt ist, wird in diesem Bereich der Abstand zwischen zwei Halmhebern 8 vergrößert, so dass in beiden Drehrichtung der Haspel 15 die Gefahr einer Kollision der Haspelzinken 15 mit einem Halmheber 8 zumindest verringert wird. Darüber hinaus wird aber insbesondere beim Reversierbetrieb der Haspel zumindest nahezu eine Verhakung zwischen einer Haspelzinke 15 und einem Halmheber 8 ausgeschlossen. Dies wird bei einem Vergleich der Figuren 2c und 2d miteinander deutlich, da im Gegensatz zu einem nach unten offenen U-Profil (Figur 2c) das erfindungsgemäß rohrförmig geschlossene Profil (Figur 2d) im Abschnitt 9 des Halmhebers 8 den Haspelzinken 15 eine deutlich reduzierte Angriffsfläche für Verhakungen bietet.

Ferner ist in der Figur 3 zu erkennen, dass der Übergangsbereich in Form des Knicks 17, mit dem das U-förmige Profilteil 11 in das rohrförmige Profilteil 12 übergeht, in Betriebsposition des Ährenhebers bezogen auf eine Horizontale oberhalb bzw. annähernd oberhalb des Halters 16 liegt.

### Bezugszeichenliste

- 1: Mähbalken
- 2: Mähfinger
- 3: Schraube
- 4: Messerbalken
- 5: Tragschiene
- 6: erstes Ende
- 7: zweites Ende
- 8: Halmheber
- 9: Abschnitt
- 10: Abschnitt
- 11: U-förmiges Profilteil
- 12: rohrförmiges Profilteil
- 13: Schenkel
- 14: Haspel
- 15: Haspelzinken
- 16: Halter
- A: Drehachse
- S: Schwenkachse
- D: Drehrichtung

## Patentansprüche

1. Ährenheber für ein Mähwerk einer Erntemaschine mit zumindest einem Mähfinger (2), umfassend
eine Tragschiene (5), die mit einem ersten Ende (6) an dem Mähwerk befestigbar ist, und
einen Halmheber (8), der mit einem zweiten Ende (7) der Tragschiene (5) verbunden ist und der mit der Tragschiene (5) einen spitzen Winkel einschließt, wobei ein der Tragschiene (5) zugewandter erster Abschnitt (10) des Halmhebers (8) aus einem im Querschnitt betrachtet U-förmigen Profilteil (11) besteht,
**dadurch gekennzeichnet,**
**dass** ein der Tragschiene (5) abgewandter zweiter Abschnitt (9) des Halmhebers (8) aus einem im Querschnitt betrachtet rohrförmigen Profilteil (12) besteht und
**dass** die zwei Abschnitte (9, 10) des Halmhebers (8) einstückig gestaltet sind.

2. Ährenheber nach Anspruch 1,
**dadurch gekennzeichnet,**
**dass** der Halmheber (8) ein Blechumformteil ist.

3. Ährenheber nach einem der vorangehenden Ansprüche,
**dadurch gekennzeichnet,**
**dass** der zweite Abschnitt (9) in einem Endbereich des Halmhebers (8) angeordnet ist.

4. Ährenheber nach einem der vorangehenden Ansprüche,
**dadurch gekennzeichnet,**
**dass** der Halmheber (8) an dem ersten Abschnitt (10) mit der Tragschiene (5) verbunden ist.

5. Ährenheber nach einem der vorangehenden Ansprüche,
**dadurch gekennzeichnet,**
**dass** beide Abschnitte (9, 10) des Halmhebers (8) einen zur Tragschiene (5) sich öffnenden Winkel einschließen.

6. Ährenheber nach einem der vorangehenden Ansprüche,
**dadurch gekennzeichnet,**
**dass** die Tragschiene (5) über Befestigungsmittel (16) mit dem Mähfinger (2) verbindbar ist und dass ein Übergangsbereich (17) der beiden Abschnitte (9, 10) des Halmhebers (8) in Betriebsposition des Ährenhebers bezogen auf eine Horizontale oberhalb der Befestigungsmittel (16) liegt.

## Claims

1. Crop lifter of a mowing device of a harvester with at least one mowing finger (2), comprising
a carrier rail (5), which is attachable with a first end (6) on the mowing device, and
a stalk lifter (8), which is connected to a second end (7) of the carrier rail (5) and which encloses with the carrier rail (5) an acute angle,
wherein a first portion (10) of the stalk lifter (8), facing the carrier rail (5), consists of a U-formed profile part (11), when seen in cross-section,
**characterised in**
**that** a second portion (9) of the stalk lifter (8), facing away from the carrier rail (5), consists of a tubular profile part (12), when seen in cross-section and
**that** the two portions (9, 10) of the stalk lifter (8) are formed integrally.

2. Crop lifter according to claim 1,
**characterised in**
**that** the stalk lifter (8) is a sheet metal formed part.

3. Crop lifter according to one of the preceding claims,
**characterised in**
**that** the second portion (9) is arranged in an end portion of the stalk lifter (8).

4. Crop lifter according to one of the preceding claims,
**characterised in**
**that** the stalk lifter (8) is connected at the first portion (10) to the carrier rail (5).

5. Crop lifter according to one of the preceding claims,
**characterised in**
**that** both portions (9, 10) of the stalk lifter (8) enclose an angle opening towards the carrier rail (5).

6. Crop lifter according to one of the preceding claims,
**characterised in**
**that** the carrier rail (5) is connectable via attachment means (16) to the mowing finger (2) and that a transition portion (17) of the two portions (9, 10) of the stalk lifter (8) are arranged in the operational position of the crop lifter in relation to a horizontal above the attachment means (16).

## Revendications

1. Releveur d'épis pour tondeuse d'une moissonneuse comportant au moins un doigt tondeur (2), comprenant
un rail porteur (5) qui peut être fixé par une première extrémité (6) à la tondeuse, et
un releveur de chaumes (8) qui est relié à une seconde extrémité (7) du rail porteur (5) et qui circonscrit avec le rail porteur (5) un angle aigu, une première section (10) tournée vers le rail porteur (5) du releveur de chaumes (8) étant composée d'une pièce profilée en forme de U vue en section transversale (11),
**caractérisé en ce**
**qu'**une seconde section (9) détournée du rail porteur (5) du releveur de chaumes (8) est composée d'une pièce profilée (12) de forme tubulaire vue en section transversale et
**que** les deux sections (9, 10) du releveur de chaumes (8) forment une seule pièce.

2. Releveur d'épis selon la revendication 1,
**caractérisé en ce que**
le releveur de chaumes (8) est une pièce formée en tôle.

3. Releveur d'épis selon une des revendications précédentes,
**caractérisé en ce que**
la second section (9) est disposée dans une partie terminale du releveur de chaumes (8).

4. Releveur d'épis selon une des revendications précédentes,
**caractérisé en ce que**
le releveur de chaume (8) est relié au niveau de la première section (10) au rail porteur (5).

5. Releveur d'épis selon une des revendications précédentes,
**caractérisé en ce que**
les deux sections (9, 10) du releveur de chaumes (8) circonscrivent un angle ouvrant sur le rail porteur (5).

6. Releveur d'épis selon une des revendications précédentes,
**caractérisé en ce que**
le rail porteur (5) peut être relié à l'aide de moyens de fixation (16) au doigt tondeur (2) et qu'une zone de transition (17) entre les deux sections (9, 10) du releveur de chaumes (8), en position de fonctionnement du releveur d'épis, se situe au-dessus des moyens de fixation (16) relativement à une horizontale.
